Europäisches Patentamt

European Patent Office

Office européen des brevets

(19)

(11) Veröffentlichungsnummer: **0 002 771**
**B1**

(12) **EUROPÄISCHE PATENTSCHRIFT**

(45) Veröffentlichungstag der Patentschrift: **14.10.81**

(51) Int. Cl.³: **C 08 F 20/06**

(21) Anmeldenummer: **78101744.7**

(22) Anmeldetag: **16.12.78**

(54) **Verfahren zur Herstellung von Polymerisaten der Acrylsäure oder Methacrylsäure.**

(30) Priorität: **22.12.77 DE 2757329**

(43) Veröffentlichungstag der Anmeldung:
**11.07.79 Patentblatt 79/14**

(45) Bekanntmachung des Hinweises auf die Patenterteilung:
**14.10.81 Patentblatt 81/41**

(84) Benannte Vertragsstaaten:
**CH DE FR GB IT NL SE**

(56) Entgegenhaltungen:
**FR - A - 2 049 863**
**FR - A - 2 212 349**
**GB - A - 1 139 430**
**NL - A - 67 14453**

(73) Patentinhaber: **BASF Aktiengesellschaft**
**Carl-Bosch-Strasse 38**
**D-6700 Ludwigshafen (DE)**

(72) Erfinder: **Muenster, Alfred, Dr.**
**Wolframstrasse 3**
**D-6700 Ludwigshafen (DE)**
Erfinder: **Rohmann, Michael, Dr.**
**Heinrich-Baermann-Strasse 15**
**D-6702 Bad Duerkheim 1 (DE)**

## Verfahren zur Herstellung von Polymerisaten der Acrylsäure oder Methacrylsäure

Die Erfindung betrifft ein Verfahren zur Herstellung von Polymerisaten der Acrylsäure oder Methacrylsäure oder deren Gemische, die gegebenenfalls bis zu 10 Gew.% eines Comonomeren einpolymerisiert enthalten, durch Polymerisieren der Monomeren in einem Lösungsmittel mit Hilfe radikalischer Polymerisationsinitiatoren bei erhöhten Temperaturen unter Anwendung von Druck.

Aus der DE—PS 655 570 ist bekannt, daß Acrylsäure und Acrylsäureester in Lösungs- und Verdünnungsmitteln, wie Aceton, Essigester, Benzol- Alkohol, Tetrachlorkohlenstoff, Chloroform, Äther, Benzin und Wasser mit Hilfe radikalischer Polymerisationsintiatoren bei höheren Temperaturen polymerisiert werden können. Nach den Angaben in der Patentschrift kann die Polymerisation auch unter gleichzeitiger Anwendung von Wärme und Druck durchgeführt werden. Wie aus den Beispielen der Patentschrift hervorgeht, wird bei der Polymerisation eine Temperatur von 100°C nicht überschriten.

Um Acrylsäurepolymerisate eines niedrigen Molekulargewichts herzustellen, kann man gemäß der Lehre der GB—PS 1 139 430 Acrylsäure in Mischungen aus Isopropanol und Wasser im Verhältnis 1:1 bei Normaldruck polymerisieren. Versucht man jedoch, die im Labor gut zu handhabende Polymerisation von Acrylsäure in Mischungen aus Isopropanol und Wasser in den Betriebsmaßstab zu übertragen, so erhält man Polymerisate, deren Eigenschaften von Polymerisationsansatz zu Polymerisationsansatz starken Schwankungen unterworfen sind. Die Acrylsäurepolymerisate eines niedrigen Molekulargewichts, die in reinem Isopropanol oder in Lösungsmittelmischungen aus Wasser und Isopropanol hergestellt werden, werden hauptsächlich als Dispergiermittel für anorganische Pigmente verwendet. Die Eigenschaften von Dispergiermitteln, die durch Polymerisation von Acrylsäure im Betriebsmaßstab hergestellt wurden, können nicht durch Änderung der Reaktionsbedingungen, wie Konzentration der Acrylsäure, Änderungen des Lösungsmittels und Variation der Peroxidmenge, reproduziert werden.

Der vorliegenden Erfindung liegt daher die Aufgabe zugrunde, das eingangs beschriebene Verfahren so zu verbessern, daß es möglich ist, auch im großtechnischen Maßstab Polymerisate eines niedrigen Molekulargewichts mit reproduzierbaren Eigenschaften herzustellen.

Die Aufgabe wird erfindungsgemäß dadurch gelöst, daß man als Lösungsmittel Isopropanol oder Mischungen aus Wasser und Isopropanol verwendet, die mindestens 40 Gew.% Isopropanol enthalten, und die Polymerisation bei Temperaturen von 120 bis 200°C unter Druck durchführt.

Nach dem erfindungsgemäßen Verfahren erhält man Polymerisate eines niedrigen Molekulargewichts, die als Dispergiermittel für anorganische Pigmente verwendet werden und überraschenderweise auch im betriebsmaßstab mit ausgezeichnet reproduzierbaren Eigenschaften hergestellt werden können. Die K—Werte der nicht neutralisierten Polymerisate betragen 7 bis 15. Die K-Werte wurden nach Fikentscher in 1%iger wäßriger Lösung bei einer Temperatur von 25°C bestimmt.

Nach dem erfindungsgemäßen Verfahren werden Acrylsäure oder Methacrylsäure oder Mischungen der genannten Carbonsäuren polymerisiert. Acrylsäure und Methacrylsäure können in jedem beliebigen Verhältnis copolymerisiert werden. Die genannten Carbonsäuren können gegebenenfalls mit anderen äthylenisch ungesättigten Comonomeren copolymerisiert werden. Geeignete Comonomere sind beispielsweise Acrylsäure- und Methacrylsäureester, Dicarbonsäuren, wie Fumarsäure oder Maleinsäure, Halbester oder Diester der genannten Dicarbonsäuren, Acrylnitril, Methacrylnitril, Acrylamid und Methacrylamid. Die Menge an Comonomeren wird so gewählt, daß wasserlösliche Polymerisate erhalten werden bzw. daß sich die Polymerisate in Alkali lösen. Die Menge des Comonomeren, von denen 1 oder mehrere verwendet werden können, beträgt bis zu 10 Gew.%. Vorzugsweise werden nach dem erfindungsgemäßen Verfahren jedoch Homopolymeriste der Acrylsäure hergestellt.

Die Polymerisation wird mit Hilfe bekannter radikalischer Polymerisationskatalysatoren initiiert. Vorzugsweise verwendet man Wasserstoffperoxid. Kalium- oder Na-peroxidisulfat oder organische Initiatoren, wie Benzoylperoxid, Bis-azo-diisobutyronitril oder andere zeigen entweder ungenügende Wirkung, zu geringe Löslichkeit oder führen zu Verfärbungen der Polymerisatlösung. Sie sind also nur bedingt geeignet.

Als Lösungsmittel kann man entweder reines Isopropanol oder Mischungen aus Wasser und Isopropanol verwenden, die Mindestens 40 Gew.% Isopropanol enthalten. Isopropanol wirkt als Polymerisationsregler, Muß jedoch, um Polymerisate eines niedrigen Molekulargewichts herzustellen, in einer Menge von mindestens 40 Gew.% in der Lösungsmittelmischung vorhanden sein. Eine andere Maßnahme, um polymerisate eines niedrigen Molekulargewichts herzustellen, besteht darin, bei der Polymerisation eine höhere Menge an Polymerisationsinitiator zu verwenden. Das vorzugsweise als Katalysator verwendete Wasserstoffperoxid wird in einer Menge von 0,2 bis 5 Gew.%, bezogen auf die Monomeren, eingesetzt (berechnet auf 100%iges Wasserstoffperoxid). Vorzugsweise wendet man Mengen zwischen 1,0% und 2,0% Wasserstoffperoxid (100%ig gerechnet) an. Eine weitere Erhöhung bringt nur noch sehr geringe Vorteile, eine Absenkung unter den Wert von 1,0% ergibt steigende K—Werte und damit eine Verminderung der Wirksamkeit.

Die Polymerisation wird in der Regel so durchgeführt, daß man zunächst erst einen Teil der Acrylsäure und der Mischung aus Wasser und Isopropanol sowie Polymerisationsinitiator vorlegt, das Reaktionsgemisch dann unter Druck auf eine Temperatur in dem Bereich von 120 bis 200°C erwärmt und die Polymerisation startet. Dann fügt man entweder kontinuierlich oder chargenweise Lösungsmittel, Acrylsäure und Polymerisationsinitiator hinzu. Um Polymerisate mit reproduzierbaren Eigenschaften zu erhalten, ist es jedoch wichtig, die Polymerisation in dem Temperaturbereich von 120°C bis 200°C und unter Druck durchzuführen. Der Druck beträgt, abhängig von der Reaktionstemperatur, etwa 2 bis 20 bar, kann jedoch auch darüber liegen.

Nachdem man die gesamte Monomerenmischung dem Polymerisationsgefäß zugeführt hat, erhitzt man das Reaktionsgemisch noch 2 bis 3 Stunden auf eine Temperatur in dem angegebenen Bereich, senkt dann den Druck im Polymerisationsgefäß ab, wobei gleichzeitig eine Mischung aus Isopropanol und Wasser abdestilliert. Isopropanol und Wasser werden entweder bei Normaldruck oder vorzugsweise im Vakuum aus dem Reaktionsgemisch entfernt. Die Destillation wird abgebrochen, sobald kein oder nur noch sehr wenig Isopropanol im Reaktionsgemisch vorhanden ist. Vorteilhafterweise entspannt man nach Reaktionsende langsam bis zur Einstellung atmosphärischen Druckes, wobei ein Großteil des Isopropanol-Wassergemisches bereits abdestilliert. Anschließend vermindert man den Druck im Reaktionsbehälter langsam unter weiterem Rühren, bis der Hauptteil an Isopropanol zusammen mit Wasser übergetrieben ist. Dann fügt man zum Rückstand Wasser und anschließend wäßrige Natronlauge hinzu und erhält so eine wäßrige Lösung eines Natriumpolysalzes. Anstelle von Natronlauge kann man auch Kalilauge oder Ammoniak und Amine verwenden. Der pH—Wert der Lösung des Polysalzes wird in der Regel auf 8,0 bis 9,0 eingestellt. Der K—Wert des Polymerisat-Salzes beträgt 15 bis 25.

In einer bevorzugten Ausführungsform des erfindungsgemäßen Verfahrens wird das Lösungsmittelgemisch, das nach Beendigung der Polymerisation aus dem Reaktionsgemisch abdestilliert wird, bei einer folgenden Polymerisation wieder eingesetzt. Das Lösungsmittelgemisch kann beliebig oft zurückgewonnen und wieder verwendet werden. Es ist lediglich erforderlich, geringfügige Verluste an Isopropanol durch Hinzugabe von frischem Isopropanol auszugleichen.

Die nach dem erfindungsgemäßen Verfahren erhaltenen Polymerisate eines niedrigen Molekulargewichts werden hauptsächlich als Dispergiermittel für anorganische Pigmente, z.B. zur Herstellung von Papierstreichfarben verwendet. Bezogen auf Pigment setzt man dabei 0,1 bis 5 Gew.% des Polyacrylats ein.

Die Erfindung wird anhand der folgenden Beispiele näher erläutert. Die K—Werte wurden nach H. Fikentscher, Cellulosechemie 13, 48 bis 64 und 71 bis 74 (1932) in 1%iger wäßriger Lösung bei einer Temperatur von 25°C gemessen; dabei bedeutet $K = k \cdot 10^3$.

Beispiel 1

In einem 15 m³ fassenden Druckbehälter, der mit einem Rührer und einem Heizmantel sowie Vorrichtungen zum Dosieren und Abdestillieren versehen ist, werden 1 600 kg eines 58%igen wäßrigen Isopropanols sowie 96 kg 50 %iges Wasserstoffperoxid vorgelegt. Das Gemisch wird auf eine Temperatur von 130°C erhitzt. Der Druck beträgt 4 bar. Sobald die Temperatur von 130°C erreicht ist, führt man aus einem unter entsprechendem Druck stehenden Vorratsbehälter innerhalb von 6 Stunden eine Mischung aus 5 000 kg Acrylsäure und 3 700 kg eines 58%igen wäßrigen Isopropanols dem Druckbehälter zu. Über eine Dosierpumpe werden zur gleichen Zeit, jedoch im Verlauf von 8 Stunden, insgesamt 200 kg eines 50%igen Wasserstoffperoxids in den Reaktor eingeführt. Während der Polymerisation wird die Temperatur der Reaktionsmischung auf 130°C gehalten. Der Druck beträgt ca. 4 bar. Nachdem das gesamte Wasserstoffperoxid zugegeben ist, hält man die Reaktionsmischung noch 2 Stunden lang auf einer Temperatur von 130°C, entspannt dann, wobei etwa 40% eines Isopropanol-Wasser-Gemisches über einen Kühler abdestillieren. Das restliche Isopropanol-Wasser-Gemisch wird unter vermindertem Druck abdestilliert. Durch Zugabe von Wasser und von 50%iger wäßriger Natronlauge zum Rückstand im Destillationsgefäß erhält man eine gebrauchsfertige Lösung eines Natriumpolyacrylats. Der pH—Wert der Polyacrylatlösung beträgt 8,5. Die Lösung enthält ca. 45 Gew.% Natriumpolyacrylat. Der K—Wert der freien Polyacrylsäure beträgt 11,8, derjenige der neutralisierten Lösung 17,2.

Das Natriumsalz de Polymerisatlösung wird als Dispergiermittel bei der Herstellung von Papierstreichmassen verwendet. Dabei wurden anwendungstechnisch optimale Werte für die Wirksamkeit des Dispergiermittels gefunden.

Beispiel 2

Das im Beispiel 1 abdestillierte Lösungsmittelgemisch wurde bei einer folgenden Polymerisation, die unter denselben Bedingungen wie im Beispiel 1 durchgeführt wurde, wiederverwendet. Zu dem zurückgewonnenen Lösungsmittelgemisch wurden lediglich 300 l Isopropanol hinzugegeben, um die Verlustmengen an Isopropanol auszugleichen. Der K-Wert der Polysäure betrug bei diesem Beispiel 11,0 und lag damit etwas unterhalb des im Beispiel 1 angegebenen Wertes. Der K—Wert der neutralisierten Polysäure betrug 15,8. Bei der Prüfung der neutralisierten Lösung als Dispergiermittel für die Herstellung von Papierstreichmassen wurden ebenfalls optimale Werte gefunden.

Das Lösungsmittelgemisch wurde für weitere Betriebsansätze verwendet. Nach 15 Chargen wurde das Destillat untersucht. Es enthielt 47,3 Gew.% Isopropanol, 28,2 Gew.% Wasser und 24,5 Gew.% nicht näher definierte Verbindungen. Hierbei dürfte es sich vermutlich um Äther bzw. Reaktionsprodukte aus Isopropanol und Wasserstoffperoxid handeln. Eine destillative Trennung des Lösungsmittelgemisches war nicht möglich, da mehrere Fraktionen mit ständig steigendem Siedepunkt auftraten, ohne daß eine scharfe Abgrenzung zu verzeichnen war. Ein Teil des höher siedenden Anteils war in reinem Wasser unlöslich. Überraschenderweise besitzt dieses Lösungsmittelgemisch eine ebenso gute Reglerwirkung wie reines Isopropanol oder Mischungen aus Isopropanol und Wasser, die mindestens 40 Gew.% Isopropanol enthalten.

Auch nach 50, 100 oder mehr aufeinanderfolgenden Betriebsansätzen unter ständiger Wiederverwendung des abdestillierten Isopropanol-Wasser-Gemisches bleibt die Reproduzierbarkeit unverändert.

Vergleichsbeispiel 1

Der im Beispiel 1 beschriebene Polymerisationsbehälter von 15 m³ Inhalt wird mit einem Rückflußkühler ausgerüstet. Man legt, wie in Beispiel 1 beschrieben, eine Mischung aus 1 600 kg eines 58%igen wäßrigen Isopropanols und 96 kg eines 50%igen Wasserstoffperoxids vor und erhitzt das Gemisch unter Rühren auf Siedetemperatur (ca. 83°C). Dann gibt man kontinuierlich innerhalb von 6 Stunden eine Mischung aus 5 000 kg Acrylsäure und 3 700 kg eines 58%igen wäßrigen Isopropanols sowie mit Hilfe einer separaten Zuleitung 200 kg eines 50%igen Wasserstoffperoxids. Das Wasserstoffperoxid wird im Verlauf von 8 Stunden gleichmäßig in den Polymerisationsbehälter zudosiert. Die Polymerisation wird bei der Siedetemperatur des Reaktionsgemisches unter Rückflußsieden durchgeführt. Nachdem man das gesamte Wasserstoffperoxid zugegeben hat, erhitzt man die Mischung noch 2 Stunden zum Sieden und destilliert, wie in den vorstehenden Beispielen beschrieben, das Lösungsmittelgemisch unter vermindertem Druck ab, bis kaum noch Isopropanol im Reaktionsgemisch vorhanden ist. Dann gibt man Wasser und innerhalb von 2 Stunden ca. 4 500 kg einer 50%igen wäßrigen Natronlauge hinzu, so daß sich ein pH—Wert von 8,6 einstellt.

Der K—Wert der Säure betrug 16,5, derjenige der neutralisierten Lösung des Polysalzes beträgt 28,0. Im Laborversuch, bei dem ein 2 l Polymerisationsgefäß verwendet wurde, erhielt man dagegen K—Werte für die Säure von 11,3 und 16,5 für die neutralisierte Polymersatlösung.

Verwendet man die gemäß Vergleichsbeispiel 1 erhaltene neutralisierte Polyacrylsäure als Dispergiermittel für die Herstellung von Papierstreichmassen, so stellt man fest, daß die Wirksamkeit dieser Polymerisatlösungen bei weitem nicht diejenige der Beispiele 1 und 2 erreicht. Man muß ca. 100% mehr Polymerisat einsetzen, um den gleichen Dispergiereffekt zu bekommen wie mit einem Polymerisat gemäß Beispiel 1.

Vergleichsbeispiel 2

Das Vergleichsbeispiel 1 wird wiederholt, jedoch mit der Ausnahme, daß man das Lösungsmittel, das im Vergleichsbeispiel 1 abdestilliert wurde, wieder verwendet und den Isopropanolverlust durch Zusatz von 200 l Isopropanol ausgleicht. Diese Verfahrensweise wurde anschließend noch 3 mal wiederholt. Die Ergebnisse sind in der Tabelle zusammengestellt.

Tabelle

| | K—Wert | |
| Vergleichs-beispiel 2 | der Polyacryl-säure | der neutralisierten Lösung der Polyacryl-säure |
| --- | --- | --- |
| a) | 16,5 | 28,0 |
| b) | 17,2 | 28,8 |
| c) | 17,8 | 30,0 |
| d) | 18,3 | 30,8 |

In allen Fällen benötigte man für die Dispergierung von Pigmenten bei der Herstellung von Papierstreichmassen ca. 70% bis 100% mehr an Dispergiermittel als es bei Verwendung eines gemäß Beispiel 1 hergestellten Natriumpolyacrylats der Fall war. Es ergab sich ferner, daß der K—Wert nicht allein für die Erzielung einer optimalen Wirksamkeit maßgeblich ist.

## Patentansprüche

1. Verfahren zur Herstellung von Polymerisaten der Acrylsäure oder Methacrylsäure bzw. deren Gemische, die gegebenenfalls bis zu 10 Gew.% eines Comonomeren einpolymerisiert enthalten, durch Polymerisation in einem Lösungsmittel mit Hilfe radikalischer Polymerisationsinitiatoren bei höheren Temperaturen unter Anwendung von Druck, dadurch gekennzeichnet, daß man als Lösungsmittel Isopropanol oder Mischungen aus Wasser und Isopropanol verwendet, die mindestens 40 Gew.% Isopropanol enthalten, und die Polymerisation bei Temperaturen von 120 bis 200°C unter Druck durchführt.

2. Verfahren gemäß Anspruch 1, dadurch gekennzeichnet, daß man das Lösungsmittelgemisch nach Beendigung der Polymerisation abdestilliert und es bei einer folgenden Polymerisation wieder verwendet.

## Claims

1. A process for the production of polymers of acrylic acid or methacrylic acid or mixtures thereof, which may contain up to 10% by weight of polymerized units of a comonomer, by polymerization in a solvent with the aid of free-radical polymerization initiators at elevated temperatures, under pressure, characterized in that isopropanol or a mixture of isopropanol and water containing at least 40% by weight of isopropanol is used as solvent, and the polymerization is carried out at a temperature of from 120 to 200°C under pressure.

2. A process as claimed in claim 1, characterized in that the solvent mixture is distilled off after the polymerization has ended and is reused in a subsequent polymerization.

## Revendications

1. Procédé de préparation de polymérisats d'acide acrylique ou méthacrylique ou leurs mélanges, qui contiennent en polymérisation éventuellement jusqu'à 10% en poids d'un comonomère, par polymérisation dans un solvant, avec l'aide d'initiateurs de polymérisation radicalaires, à températures élevées et avec utilisation de pression, caractérisé par le fait que l'on utilise, comme solvant, de l'isopropanol ou des mélanges d'eau et d'isopropanol, qui contiennent au moins 40% en poids d'isopropanol, et l'on effectue la polymérisation à des températures de 120 à 200°C, sous pression.

2. Procédé selon la revendication 1, caractérisé par le fait que l'on sépare par distillation le mélange solvant après la fin de la polymérisation et on le réutilise pour une polymérisation suivante.